(19) Europäisches Patentamt
European Patent Office
Office européen des brevets

(11) EP 0 794 207 B1

(12) # EUROPÄISCHE PATENTSCHRIFT

(45) Veröffentlichungstag und Bekanntmachung des Hinweises auf die Patenterteilung:
**03.05.2000 Patentblatt 2000/18**

(51) Int Cl.[7]: **C08G 61/08**, H01B 3/30

(21) Anmeldenummer: **97810101.2**

(22) Anmeldetag: **25.02.1997**

(54) **Härtbare Zusammensetzung enthaltend ein Diels-Alder-Addukt von Cyclopentadien und einen Füllstoff**

Curable composition containing a cyclopentadiene Diels-Alder adduct and a filler

Composition durcissable contenant un produit d'addition Diels-Alder de cyclopentadiène et une charge

(84) Benannte Vertragsstaaten:
**CH DE ES FR GB IT LI**

(30) Priorität: **07.03.1996 CH 60196**

(43) Veröffentlichungstag der Anmeldung:
**10.09.1997 Patentblatt 1997/37**

(73) Patentinhaber: **Ciba Specialty Chemicals Holding Inc.**
**4057 Basel (CH)**

(72) Erfinder:
- **Setiabudi, Frans**
  **79427 Eschbach (DE)**
- **Mühlebach, Andreas**
  **1782 Belfaux (CH)**
- **Naganuma, Yoshiaki**
  **Takarazuka, Hyogo 665 (JP)**

(56) Entgegenhaltungen:
**WO-A-93/20111** **WO-A-96/04289**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 794 207 B1

Printed by Jouve, 75001 PARIS (FR)

## Beschreibung

Die vorliegende Erfindung betrifft eine Zusammensetzung enthaltend ein Diels-Alder-Addukt von Cyclopentadien, einen ROMP-Katalysator und einen ein basisches Adsorptionsmittel enthaltenden Füllstoff, ein Verfahren zur Herstellung eines Metathesepolymerisats aus dieser Zusammensetzung sowie die Verwendung dieser Zusammensetzung als Umhüllungsmaterial für elektrische oder elektronische Bauteile.

Cycloolefine, die mittels ringöffnender Metathese-Polymerisation (ROMP) polymerisiert werden können, sollten aufgrund ihrer guten mechanischen und elektrischen Eigenschaften grundsätzlich für Elektroanwendungen geeignet sein. Aufgrund des relativ niedrigen Preises bieten sich vor allem Dicyclopentadien und Norbornenderivate an. Solche Systeme werden beispielsweise in WO 96/16100, WO 96/20235 oder in der EP-A-348 852 beschrieben.
Im US-Patent 4,584,425 wird empfohlen, kommerziell erhältliches Dicyclopentadien vor der ROMP-Reaktion zu destillieren und anschliessend mit Aluminiumoxid oder einem Zeolithen zu behandeln.

Bei der Anwendung als Umhüllungsmaterial für elektrische oder elektronische Bauteile empfiehlt es sich, den härtbaren Zusammensetzungen zur Erhöhung der mechanischen Festigkeit Füllstoffe zuzusetzen. Solche Zusammensetzungen sind beispielsweise in der EP-A-84 888 beschrieben.
Allerdings werden bei der schnellen Aushärtung von gefüllten ROMP-Systemen auf Basis von Dicyclopentadien und Norbornenderivaten Produkte mit relativ niedriger Glasübergangstemperatur erhalten.

Aufgabe der vorliegenden Erfindung war es, gefüllte Harzsysteme für die ringöffnende Metathese-Polymerisation bereitzustellen, die sich in kurzer Zeit bei hoher Temperatur zu Produkten mit hoher Glasübergangstemperatur aushärten lassen.

Es wurde nun gefunden, dass diese Aufgabe durch Zusatz eines basischen Adsorptionsmittels zum Füllstoff gelöst werden kann.

Gegenstand der vorliegenden Erfindung ist eine Zusammensetzung enthaltend

(a) ein Diels-Alder-Addukt von Cyclopentadien,
(b) einen Katalysator für die ringöffnende Metathese-Polymerisation und
(c) 2-95 Gew.-%, bezogen auf die Gesamtzusammensetzung, eines Füllstoffs,

wobei der Füllstoff mindestens 0,5 Gew.-%, bezogen auf die Gesamtzusammensetzung, eines basischen Adsorptionsmittels enthält.

Als Komponente (a) können im Prinzip alle Verbindungen eingesetzt werden, die durch Diels-Alder-Reaktion von Cyclopentadien mit geeigneten Dienophilen hergestellt werden können.

Geeignete Diels-Alder-Addukte sind beispielsweise die folgenden Verbindungen:

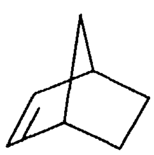 (1), 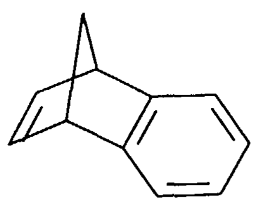 (2), 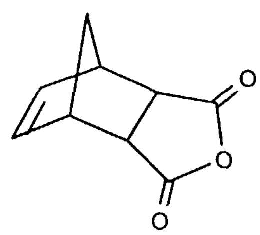 (3),

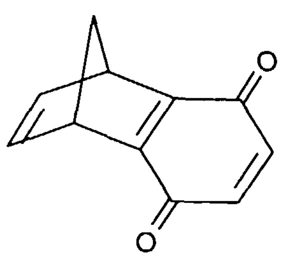 (4), 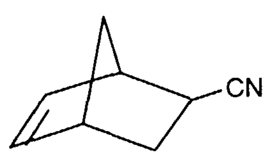 (5), 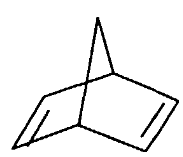 (6),

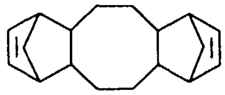 (7),

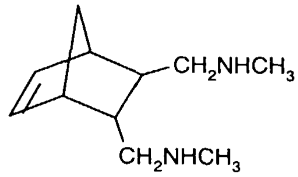 (8),

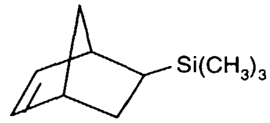 (9),

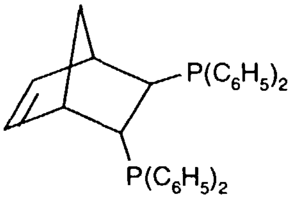 (10),

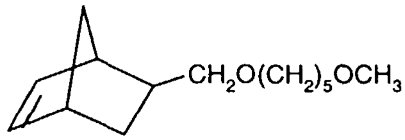 (11),

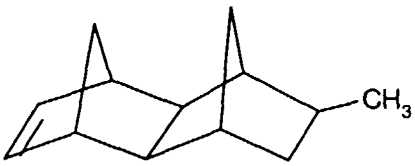 (11),

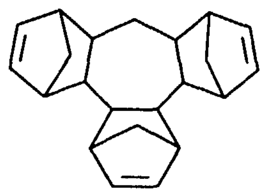 (12),

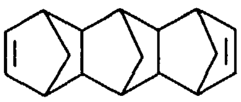 (13),

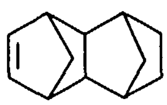 (14),

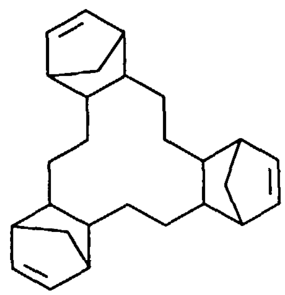 (15)

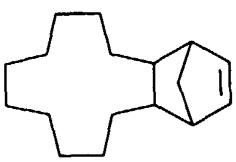 (16),

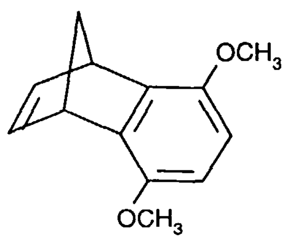 (17),

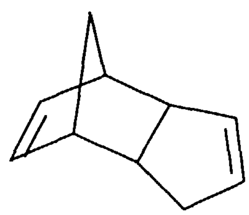 (18),

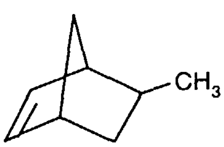 (19),

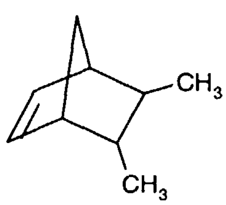 (20),

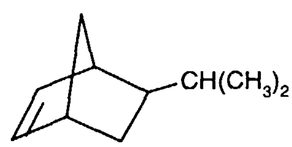 (21),

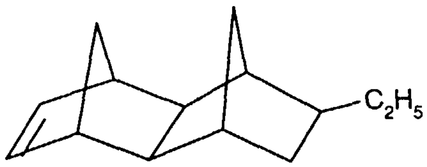
(22),
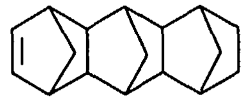
(23).

Bevorzugte Diels-Alder-Addukte sind Tetracyclododecen (14), Methyltetracyclododecen (11) und insbesondere Dicyclopentadien (18).

Als Katalysatoren für die ringöffnende Metathese-Polymerisation (ROMP-Katalysatoren) ist dem Fachmann eine grosse Zahl von Verbindungen der Übergangsmetalle Titan, Vanadium, Molybdän, Wolfram, Rhenium, Iridium, Ruthenium und Osmium bekannt. Hierbei handelt es sich beispielsweise um komplexe Metallhalogenide, Metallo-Carbene oder Koordinations-Katalysatoren vom Ziegler-Natta-Typ. Alle diese bekannten ROMP-können im Prinzip als Komponente (b) in den erfindungsgemässen Zusammensetzungen verwendet werden.

Vorzugsweise wird ein Ruthenium(+II)-Komplexsalz oder ein Osmium(+II)-Komplexsalz, besonders bevorzugt ein Ruthenium(+II)-Komplexsalz, als Komponente (b) verwendet.

Da die Verwendung absolut wasserfreier Substanzen und Apparaturen einen zusätzlichen Aufwand erfordert, empfiehlt es sich, feuchtigkeitsunempfindliche ROMP-Katalysatoren einzusetzen, wie z.B. die in WO 96/16100 und WO 96/20235 beschriebenen Ruthenium(+II)-und Osmium(+II)-Komplexsalze.

Bevorzugte ROMP-Katalysatoren sind daher Ruthenium(+II)-Komplexsalze der Formel I

$$(R_1R_2R_3P)_xL_yRu^{2+}Z_1^{\,-}Z_2^{\,-} \quad (I),$$

worin

$R_1$, $R_2$ und $R_3$ unabhängig voneinander Phenyl, Tolyl oder Cyclohexyl bedeuten,
L für unsubstituiertes oder mit 1 bis 3 $C_1$-$C_4$-Alkyl substituiertes Benzol, Thiophen, Benzonitril, Acetonitril, Stickstoff ($N_2$), einen unsubstituierten oder teilweise oder vollständig fluorierten $C_1$-$C_4$-Alkohol, CO, $H_2O$ oder $NH_3$ steht,
$Z_1^-$ und $Z_2^-$ unabhängig voneinander für $H^-$, $Cl^-$, $Br^-$, $BF_4^-$, $PF_6^-$, $SbF_6^-$, $ASF_6^-$, $CF_3SO_3^-$, $C_6H_5$-$SO_3^-$, p-Toluolsulfonat (Tosylat), 3,5-Dimethylphenylsulfonat, 2,4,6-Trimethylphenylsulfonat, 4-Trifluormethylphenylsulfonat oder Cyclopentadienyl stehen,
x eine Zahl von 1 bis 3 und y eine Zahl von 0 bis 3 darstellen, wobei gilt $2 \leq x+y \leq 4$.

Weitere geeignete ROMP-Katalysatoren sind die in der WO 93/20111 beschriebenen Metall-Carben-Komplexe.
Bevorzugte Metall-Carben-Komplexe sind die Verbindungen der Formel II

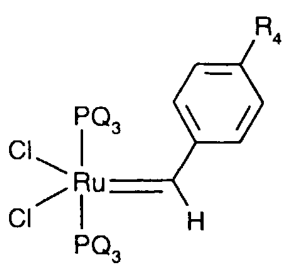
(II),

worin Q für Phenyl, Cyclopentyl oder Cyclohexyl steht und $R_4$ Wasserstoff, Chlor oder tert.-Butyl bedeutet.

Besonders bevorzugte ROMP-Katalysatoren sind $[(Cyclohexyl)_3P]_2RuCl_2$, $[(C_6H_5)_3P]_3 RuCl_2$, $[(C_6H_5)_3P]_3(CO)RuH_2$, $[(C_6H_5)_3P]_3$ RuCl(Cyclopentadienyl), $[(Cyclohexyl)_3P]_2(CH_3OH)Ru(Tosylat)_2$, $[(o\text{-}Tolyl)_3P]_3RuCl_2$, $[(CH_3)_2CH]_3P$(p-Cymol)$RuCl_2$ und insbesondere $(Cyclohexyl)_3P$(p-Cymol)$RuCl_2$.

Geeignete Füllstoffe, die als Komponente (c) in den erfindungsgemässen Zusammensetzungen verwendet werden können, sind beispielsweise Metallpulver, Holzmehl, Glaspulver, Glaskugeln, Halbmetall- und Metalloxide, wie zum Beispiel $SiO_2$ (Aerosile, Quarz, Quarzmehl, Quarzgut), Korund und Titanoxid, Halbmetall- und Metallnitride, wie

zum Beispiel Siliziumnitrid, Bornitrid und Aluminiumnitrid, Halbmetall- und Metallcarbide (SiC), Metallcarbonate (Dolomit, Kreide, $CaCO_3$), Metallsulfate (Baryt, Gips), Gesteinsmehle und natürliche oder synthetische Mineralien hauptsächlich aus der Silikatreihe, wie zum Beispiel Talkum, Glimmer, Kaolin, Wollastonit, Bentonit und andere.

Vorzugsweise wird ein Metalloxid, -carbonat, -sulfat oder -silikat oder $SiO_2$ als Komponente (c) verwendet.

Besonders bevorzugt als Komponente (c) ist $SiO_2$.

Von den verschiedenen $SiO_2$-Modifikationen sind Quarzmehl und Quarzgutmehl besonders bevorzugt.

Als basische Adsorptionsmittel können im Prinzip alle in der Chromatographie bekannten Adsorbentien eingesetzt werden, sofern sie, gegebenenfalls nach entsprechender Vorbehandlung, in wässriger Lösung alkalisch reagieren.

Beispiele für geeignete Adsorptionsmittel sind basisches Aluminiumoxid, Kieselgele, Kieselgur, Magnesiumsilikat (Florisil), Cellulose, Polyamide sowie natürliche und synthetische Zeolithe.

Bevorzugte basische Adsorptionsmittel sind basisches Aluminiumoxid, Kieselgele und insbesondere Zeolithe.

Besonders bevorzugt werden in den erfindungsgemässen Zusammensetzungen die als Molekularsiebe bekannten natürlichen und synthetischen Zeolithe eingesetzt. Dabei ist weder die Porenweite noch die Kristallstruktur des Zeoliths kritisch für das Konzept der Erfindung, d.h. es können ohne Einschränkung Zeolithe der Typen A, X, Y und L mit den gebräuchlichen Porenweiten von ca. 3-10 Angström verwendet werden.

Die Mengen der Komponenten (a), (b) und (c) können in den erfindungsgemässen Zusammensetzungen in weiten Bereichen variieren.

Vorzugsweise enthalten die erfindungsgemässen Zusammensetzungen, bezogen auf die Gesamtzusammensetzung, 15-96 Gew.-% der Komponente (a), 0,001-10,0 Gew.-% der Komponente (b) und 4-85 Gew.-%, der Komponente (c).

Besonders bevorzugt sind erfindungsgemässe Zusammensetzungen enthaltend 25-65 Gew.-%, insbesondere 30-50 Gew.-%, der Komponente (a), 0,01-2,0 Gew.-%, insbesondere 0,1-1,0 Gew.-%, der Komponente (b) und 30-75 Gew.-%, insbesondere 50-70 Gew.-%, der Komponente (c).

Der Gehalt des basischen Adsorptionsmittels im Füllstoff (c) kann ebenfalls in weiten Bereichen variieren und bis zu 95 Gew.-%, bezogen auf die Gesamtzusammensetzung, ausmachen.

Vorzugsweise beträgt die Menge des basischen Adsorptionsmittels 1,0-10,0 Gew.-%, insbesondere 2,0-5,0 Gew.-%, bezogen auf die Gesamtzusammensetzung.

Die gewünschte Viskosität des härtbaren Gemisches kann durch Zusatz von thermoplastischen Materialien eingestellt werden. Beispiele für geeignete Thermoplasten sind Polystyrol, Polynorbornen (z.B. Norsorex® NS der Fa. Nippon Zeon), hydrierte Polynorbornenderivate (z.B. Zeonex® der Fa. Nippon Zeon), Polycycloocten (z.B. Vestenamer® der Fa. Hüls) und Polybutadien.

Weiterhin können die härtbaren Mischungen Zähigkeitsvermittler ("Toughener") enthalten, wie zum Beispiel Core/Shell-Polymere oder die dem Fachmann als "Rubber Toughener" bekannten Elastomere oder Elastomere enthaltende Pfropfpolymere.

Geeignete Zähigkeitsvermittler sind beispielsweise in der EP-A-449 776 beschrieben.

Zur Verbesserung der elektrischen Eigenschaften (Dielektrizitätskonstante, Verlustfaktor) können den härtbaren Mischungen Silane, wie z.B. die von der Fa. Osi Specialties unter der Bezeichnung Silquest® Silan angebotenen Verbindungen, zugesetzt werden. Geeignete Silane sind beispielsweise Octyltriethoxysilan, Methyltriethoxysilan, Vinyltriethoxysilan, Methyltrimethoxysilan, Vinyltrimethoxysilan, γ-Aminopropyltrimethoxysilan und γ-Glycidyloxypropyltrimethoxysilan.

Neben den oben erwähnten Additiven können die erfindungsgemässen Zusammensetzungen weitere übliche Zusatzstoffe enthalten, wie z.B. Antioxidantien, Lichtschutzmittel, Weichmacher, Farbstoffe, Pigmente, Thixotropiemittel, Entschäumer, Antistatika, Gleitmittel und Entformungshilfsmittel.

Weiterhin kann die erfindungsgemässe Zusammensetzung inerte Lösungsmittel enthalten. Geeignete inerte Lösungsmittel sind zum Beispiel protisch-polare und aprotische Lösungsmittel, die allein oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylharnstoff, Hexamethylphosphorsäuretriamid, γ-Butyrolactam, ε-Caprolactam, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin), aliphatische und aromatische Kohlenwasserstoffe, wie zum Beispiel Petrolether, Pentan, Hexan, Cyclohexan, Methylcyclohexan, Benzol oder substituierte Benzole (Chlorbenzol, o-Dichlorbenzol, 1,2,4-Trichlorbenzol, Nitrobenzol, Toluol, Xylol) und Nitrile (Acetonitril, Propionitril, Benzonitril, Phenylacetonitril). Bevorzugte Lösungsmittel sind aprotische polare und unpolare Lösungsmittel.

Bevorzugte Lösungsmittel sind aliphatische und aromatische Kohlenwasserstoffe sowie Gemische solcher Lösungsmittel.

Ein besonderer Vorteil der erfindungsgemässen Zusammensetzungen besteht darin, daß bei flüssigen Monomeren eine Metathesepolymerisation ohne die Verwendung eines Lösungsmittels durchgeführt werden kann.

Die Herstellung der erfindungsgemässen Stoffgemische kann in üblicher Weise durch Vermischen der Komponenten mit Hilfe bekannter Mischaggregate (Rührer, Kneter, Walzen, Mühlen, Trockenmischer oder Dünnschichtentgasungsmischer) erfolgen.

Die erfindungsgemässe Zusammensetzung kann direkt vor der Polymerisation hergestellt oder als vorformuliertes Gemisch verwendet werden. Das Gemisch kann vor der Polymerisation als gebrauchsfertige Formulierung längere Zeit gelagert werden, was für die grosstechnische Anwendung von Vorteil ist. Es empfiehlt sich jedoch eine Lagerung unter Lichtausschluss, wenn der Katalysator photolabile Liganden enthält.

Einen weiteren Erfindungsgegenstand bildet ein Verfahren zur Herstellung eines Metathesepolymerisats, dadurch gekennzeichnet, dass eine Zusammensetzung enthaltend die Komponenten (a) bis (c) auf eine Temperatur >40 °C erwärmt wird.

Zweckmässig wird das erfindungsgemässe Verfahren bei einer Temperatur von mindestens 60°C durchgeführt. Insbesondere wird das erfindungsgemäße Verfahren bei Temperaturen von 60 bis 300 °C, bevorzugt 60 bis 250 °C, besonders bevorzugt 60 bis 200 °C und insbesondere bevorzugt 70 bis 160 °C, durchgeführt. Nach der Polymerisation kann es vorteilhaft sein, das Gemisch bei erhöhten Temperaturen, zum Beispiel 80 bis 200 °C, nachzutempern.

Die Polymerisation kann mit formgebenden Verfahren verbunden sein, zum Beispiel Kalandrier-, Giess-, Press-, Spritzguss- oder Extrusionsverfahren. Mit dem erfindungsgemässen Verfahren können Werkstoffe zur Herstellung von Formkörpern aller Art und Beschichtungen hergestellt werden. Vorteilhaft werden Formgebung und Polymerisation in lösungsmittelfreien Reaktivsystemen verbunden, wobei Verarbeitungsverfahren, wie zum Beispiel Spritzgiessen, Extrusion, Polymerisationen in vorgegebenen Formen (gegebenenfalls unter Druck) angewendet werden können.

Die nach dem erfindungsgemässen Verfahren hergestellten Metathesepolymerisate können ausserdem Homopolymere, Copolymere mit statistischer Verteilung der Struktureinheiten, Pfropfpolymere, Blockpolymere oder vernetzte Polymere enthalten. Die Polymere können ein mittleres Molekulargewicht von 500 bis zu 2'000'000 Dalton, vorzugsweise 1000 bis 1'000'000 Dalton (bestimmt mittels Gelpermeationschromatographie) aufweisen.

Die nach dem erfindungsgemässen Verfahren hergestellten Metathesepolymerisate zeichnen sich vor allem durch eine hohe Wärmestabilität, hohe Zähigkeit und mechanische Festigkeit sowie durch gute elektrische Eigenschaften (niedrige Dielektrizitätskonstante, niedriger Verlustfaktor bzw. tanδ-Wert) aus und eignen sich besonders für Anwendungen in der Vakuum-Giesstechnologie, insbesondere als Umhüllungsmaterial für elektrische und elektronische Bauteile.

Die gehärteten Vergussmassen weisen gute mechanische und dielektrische Eigenschaften und eine hohe Lebensdauer aus.

Gegenstand der vorliegenden Erfindung ist somit auch die Verwendung der erfindungsgemässen Zusammensetzung als Umhüllungsmaterial für elektrische oder elektronische Bauteile.

Es wurde ausserdem gefunden, dass die bei Verwendung von kommerziell erhältlichem Dicyclopentadien (94 %), welches einen relativ starken unangenehmen Geruch besitzt, üblicherweise bei der Entformung auftretende Geruchsbelästigung bei den erfindungsgemässen Zusammensetzungen im Vergleich zu analogen Zusammensetzungen, welche kein basisches Adsorptionsmittel enthalten, stark reduziert ist.

Beispiele:

Das in den Beispielen 1 und 2 verwendete Dicyclopentadien wird mindestens 4 Tage bei Raumtemperatur über KOH oder Molekularsieb (5 Angström) getrocknet. Vor Gebrauch wird die benötigte Menge Dicyclopentadien ca. 5 Minuten unter Vakuum (3 mbar) entgast. In den Beispielen 3-6 wird kommerziell erhältliches Dicyclopentadien der Fa. Shell (94 %) eingesetzt.

Als ROMP-Katalysator wird in allen Beispielen $(Cyclohexyl)_3P(p\text{-}Cymol)RuCl_2$ (Katalysator A) verwendet.

Weiterhin werden die folgenden kommerziell erhältlichen Substanzen eingesetzt:

| | |
|---|---|
| Byk 066: | Entschäumer (Fa. Byk Chemie) |
| Quarzmehl W 12: | Füllstoff (Quarzwerke Frechen) |
| Norsorex® NS: | thermoplastisches Polynorbornen (Nippon Zeon) |
| Silquest® A-171: | Vinyltrimethoxysilan (Fa. Osi Specialties) |
| Smellrite®: | Zeolith (Fa. UOP) |
| Abscents® 1000: | Zeolith (Fa. UOP) |
| Abscents® 3000: | Zeolith (Fa. UOP) |

Beispiel 1 (Vergleich):

Eine Mischung aus 38,95 g Dicyclopentadien und 0,4 g Polynorbornen (Norsorex® NS) wird auf 80 °C erhitzt. Nach der vollständigen Auflösung des Polynorbornens lässt man die Mischung auf 60 °C abkühlen und gibt unter Rühren 0,49 g Silquest® A-171 und 0,26 g Byk 066 hinzu. Anschliessend wird 0,2 g Katalysator A hinzugefügt, und die Mischung wird 20-25 min bei 60 °C gerührt, bis der Katalysator vollständig gelöst ist. Danach wird 59,7 g Quarzmehl W 12 ohne weiteres Erwärmen portionsweise zugegeben. Das Reaktionsgemisch wird noch 1 h gerührt, kurz evakuiert und anschliessend in eine Metallform gegossen. Die Form wird dann rasch bei hoher Temperatur gehärtet (4 h/150 °C). Die gehärtete Mischung weist eine Glasübergangstemperatur $T_g$ (gemessen mittels DSC, Mettler TA 4000) von 50 °C auf.

Beispiel 2:

Eine Mischung aus 38,95 g Dicyclopentadien und 0,4 g Polynorbornen (Norsorex® NS) wird auf 80 °C erhitzt. Nach der vollständigen Auflösung des Polynorbornens lässt man die Mischung auf 60 °C abkühlen und gibt unter Rühren 0,49 g Silquest® A-171 und 0,26 g Byk 066 hinzu. Anschliessend wird 0,2 g Katalysator A hinzugefügt, und die Mischung wird 20-25 min bei 60 °C gerührt, bis der Katalysator vollständig gelöst ist. Danach wird ein Gemisch aus 56,7 g Quarzmehl W 12 und 3,0 g Molekularsieb (5 Angström, pulvrig, Fa. Fluka) ohne weiteres Erwärmen portionsweise zugegeben. Das Reaktionsgemisch wird noch 1 h gerührt, kurz evakuiert und anschliessend in eine Metallform gegossen. Die Form wird dann rasch bei hoher Temperatur ausgehärtet (4 h/150 °C).
Die gehärtete Mischung weist eine Glasübergangstemperatur $T_g$ (gemessen mittels DSC, Mettler TA 4000) von 93 °C auf.

Beispiele 3-6:

Die in der Tabelle 1 angegebenen Mischungen werden jeweils in einem verschlossenen flachen Behälter (Durchmesser: 6 cm) mit einer kleinen Öffnung 3h bei 80 °C gehärtet. Nach Öffnen des Behälters wird festgestellt, dass die Mischungen, welche Zeolith enthalten (Beispiele 3-5) einen erheblich schwächeren Geruch als die vergleichbare Mischung ohne Zeolith (Beispiel 6) aufweisen.

Tabelle 1:

| Beispiel | 3 | 4 | 5 | 6 (Vergleich) |
|---|---|---|---|---|
| Dicyclopentadien [g] | 98,2 | 98,2 | 98,2 | 98,2 |
| Norsorex® NS [g] | 1,7 | 1,7 | 1,7 | 1,7 |
| Smellrite® [g] | 0,5 | - | - | - |
| Abscents® 1000 [g] | - | 0,5 | - | - |
| Abscents® 3000 [g] | - | - | 0,5 | - |
| Katalysator A | 0,3 | 0,3 | 0,3 | 0,3 |
| $T_g$/°C | 89,6 | 88,3 | 86,1 | 81,8 |
| Geruch | sehr schwach | schwach | schwach | stark |

## Patentansprüche

**1.** Zusammensetzung enthaltend

(a) ein Diels-Alder-Addukt von Cyclopentadien,
(b) einen Katalysator für die ringöffnende Metathese-Polymerisation und
(c) 2-95 Gew.-%, bezogen auf die Gesamtzusammensetzung, eines Füllstoffs,

wobei der Füllstoff mindestens 0,5 Gew.-%, bezogen auf die Gesamtzusammensetzung, eines basischen Adsorptionsmittels enthält.

**2.** Zusammensetzung nach Anspruch 1, enthaltend als Komponente (a) Dicyclopentadien, Tetracyclododecen oder Methyltetracyclododecen.

3. Zusammensetzung nach Anspruch 1, enthaltend als Komponente (a) Dicyclopentadien.

4. Zusammensetzung nach Anspruch 1, enthaltend als Komponente (b) ein Ruthenium(+II)-Komplexsalz oder ein Osmium(+II)-Komplexsalz.

5. Zusammensetzung nach Anspruch 1, enthaltend als Komponente (b) ein Ruthenium(+II)-Komplexsalz der Formel I

$$(R_1R_2R_3P)_xL_yRu^{2+}Z_1^{-}Z_2^{-} \quad (I),$$

worin

$R_1$, $R_2$ und $R_3$ unabhängig voneinander Phenyl, Tolyl oder Cyclohexyl bedeuten,
L für unsubstituiertes oder mit 1 bis 3 $C_1$-$C_4$-Alkyl substituiertes Benzol, Thiophen, Benzonitril, Acetonitril, Stickstoff ($N_2$), einen unsubstituierten oder teilweise oder vollständig fluorierten $C_1$-$C_4$-Alkohol, CO, $H_2O$ oder $NH_3$ steht,
$Z_1^-$ und $Z_2^-$ unabhängig voneinander für $H^-$, $Cl^-$, $Br^-$, $BF_4^-$, $PF_6^-$, $SbF_6^-$, $AsF_6^-$, $CF_3SO_3^-$, $C_6H_5$-$SO_3^-$, p-Toluolsulfonat (Tosylat), 3,5-Dimethylphenylsulfonat, 2,4,6-Trimethylphenylsulfonat, 4-Trifluormethylphenylsulfonat oder Cyclopentadienyl stehen,
x eine Zahl von 1 bis 3 und y eine Zahl von 0 bis 3 darstellen, wobei gilt $2 \leq x+y \leq 4$.

6. Zusammensetzung nach Anspruch 1, enthaltend als Komponente (b) eine Verbindung der Formel II

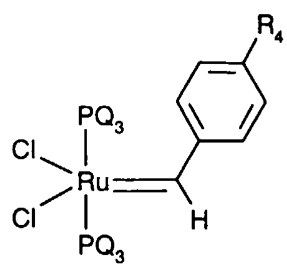

(II),

worin Q für Phenyl, Cyclopentyl oder Cyclohexyl steht und $R_4$ Wasserstoff, Chlor oder tert.-Butyl bedeutet.

7. Zusammensetzung nach Anspruch 1, enthaltend als Komponente (b) (1-Methyl-4-isopropylbenzol)$RuCl_2P$(Cyclohexyl)$_3$.

8. Zusammensetzung nach Anspruch 1, enthaltend als Komponente (b) ein Metalloxid, -carbonat, -sulfat oder -silikat oder $SiO_2$.

9. Zusammensetzung nach Anspruch 1, enthaltend als Komponente (c) $SiO_2$.

10. Zusammensetzung nach Anspruch 1, enthaltend basisches Aluminiumoxid, ein Kieselgel oder einen Zeolithen als basisches Adsorptionsmittel.

11. Zusammensetzung nach Anspruch 1, enthaltend einen Zeolithen als basisches Adsorptionsmittel.

12. Zusammensetzung nach Anspruch 1, enthaltend, bezogen auf die Gesamtzusammensetzung, 15-96 Gew.-% der Komponente (a), 0,001-10,0 Gew.-% der Komponente (b) und 4-85 Gew.-%, der Komponente (c).

13. Zusammensetzung nach Anspruch 1, worin die Menge des basischen Adsorptionsmittels 1,0-10,0 Gew.-%, bezogen auf die Gesamtzusammensetzung, beträgt.

14. Verfahren zur Herstellung eines Metathesepolymerisats, dadurch gekennzeichnet, dass eine Zusammensetzung

nach Anspruch 1 auf eine Temperatur >40 °C erwärmt wird.

**15.** Verwendung der Zusammensetzung nach Anspruch 1 als Umhüllungsmaterial für elektrische oder elektronische Bauteile.

## Claims

**1.** A composition, comprising

(a) a Diels-Alder-adduct of cyclopentadiene,
(b) a catalyst for the ring-opening metathesis polymerisation, and
(c) 2-95 % by weight of a filler, based on the entire composition,

the filler containing at least 0.5 % by weight of a basic adsorbent, based on the entire composition.

**2.** A composition according to claim 1, wherein component (a) is dicyclopentadiene, tetracyclododecene or methyltetracyclododecene.

**3.** A composition according to claim 1, wherein component (a) is dicyclopentadiene.

**4.** A composition according to claim 1, wherein component (b) is a ruthenium(+II) complex salt or an osmium(+II) complex salt.

**5.** A composition according to claim 1, wherein component (b) is a ruthenium(+II) complex salt of formula I

$$(R_1R_2R_3P)_xL_yRu^{2+}Z_1^-Z_2^- \quad (I),$$

wherein

$R_1$, $R_2$ and $R_3$ are each independently of one another phenyl, tolyl or cyclohexyl,
L is benzene, thiophene, benzonitrile, acetonitrile, nitrogen ($N_2$), each of which is unsubstituted or substituted by 1 to 3 $C_1$-$C_4$alkyl, or unsubstituted or partially or completely fluorinated $C_1$-$C_4$alcohol, CO, $H_2O$ or $NH_3$,
$Z_1^-$ and $Z_2^-$ are each independently of the other $H^-$, $Cl^-$, $Br^-$, $BF_4^-$, $PF_6^-$, $SbF_6^-$, $ASF_6^-$, $CF_3SO_3^-$, $C_6H_5$-$SO_3^-$, p-toluenesulfonate (tosylate), 3,5-dimethylphenylsulfonate, 2,4,6-trimethylphenylsulfonate, 4-trifluoromethylphenylsulfonate or cyclopentadienyl,
x is a number from 1 to 3, and y is a number from 0 to 3, 2 being $\leq x+y \leq 4$.

**6.** A composition according to claim 1, wherein component (b) is a compound of formula II

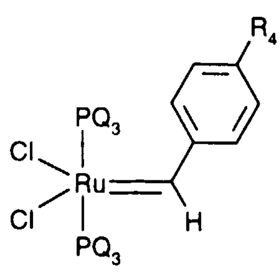

(II),

wherein Q is phenyl, cyclopentyl or cyclohexyl, and $R_4$ is hydrogen, chloro or tert-butyl.

**7.** A composition according to claim 1, wherein component (b) is (1-methyl-4-isopropylbenzene)$RuCl_2P$(cyclohexyl)$_3$.

**8.** A composition according to claim 1, wherein component (c) is a metal oxide, metal carbonate, metal sulfate or

metal silicate, or $SiO_2$.

**9.** A composition according to claim 1, wherein component (c) is $SiO_2$.

**10.** A composition according to claim 1, wherein the basic adsorbent is basic aluminium oxide, a silica gel or a zeolite.

**11.** A composition according to claim 1, wherein the basic adsorbent is a zeolite.

**12.** A composition according to claim 1, comprising 15-96 % by weight of component (a), 0.001-10.0 % by weight of component (b) and 4-85 % by weight of component (c), based on the entire composition.

**13.** A composition according to claim 1, wherein the basic adsorbent is present in an amount of 1.0-10.0 % by weight, based on the entire composition.

**14.** A process for the preparation of a metathesis polymer, which comprises heating a composition as claimed in claim 1 to a temperature of >40 °C.

**15.** Use of a composition as claimed in claim 1 as coating material for electrical or electronic components.

**Revendications**

**1.** Composition contenant

(a) un adduit de Diels-Alders du cyclopentadiène,
(b) un catalyseur pour la polymérisation par métathèse décyclisante et
(c) de 2 à 95% en masse, par rapport à la totalité de la composition, d'une charge, la charge contenant au moins 0,5% en masse, par rapport à la totalité de la composition, d'un adsorbant basique.

**2.** Composition selon la revendication 1, contenant en tant que composant (a) le dicyclopentadiène, le tétracyclododécène ou le méthyltétracyclododécène.

**3.** Composition selon la revendication 1, contenant en tant que composant (a) le dicyclopentadiène.

**4.** Composition selon la revendication 1, contenant en tant que composant (b) un sel complexe de ruthénium (+II) ou un sel complexe d'osmium (+II).

**5.** Composition selon la revendication 1, contenant en tant que composant (b) un sel complexe de ruthénium (+II) de formule I

$$(R_1R_2R_3P)_xL_yRu^{2+}Z_1^-Z_2^- \qquad (I)$$

dans laquelle

$R_1$, $R_2$ et $R_3$ représentent, indépendamment l'un de l'autre, des groupes phényle, tolyle ou cyclohexyle,
L représente un groupe alkyle en $C_1$-$C_4$ non substitué ou substitué par 1 à 3 substituants benzène, thiophène, benzonitrile, acétonitrile, azote ($N_2$), un alcool en $C_1$-$C_4$ non substitué ou partiellement ou complètement fluoré, CO, $H_2O$ ou $NH_3$,
$Z_1^-$ et $Z_2^-$ représentent, indépendamment l'un de l'autre, $H^-$, $Cl^-$, $Br^-$, $BF_4^-$, $PF_6^-$, $SbF_6^-$, $AsF_6^-$, $CF_3SO_3^-$, $C_6H_5$-$SO_3^-$, p-toluènesulfonate (tosylate), le 3,5-diméthylphénylsulfonate, le 2,4,6-triméthylphénylsulfonate, le 4-trifluorméthylphénylsulfonate ou le cyclopentadiényle,
x va de 1 à 3 et y va de 0 à 3, $2 \leq x + y \leq 4$.

**6.** Composition selon la revendication 1, contenant en tant que composant (b), un composé de formule II

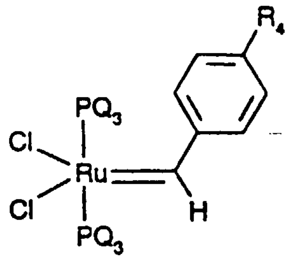

(II)

où

Q représente des groupes phényle, cyclopentyle ou cyclohexyle et
$R_4$ représente un atome d'hydrogène, un atome de chlore ou un groupe tert.-butyle.

**7.** Composition selon la revendication 1, contenant en tant que composant (b) le (1-méthyl-4-isopropylbenzène)-$RuCl_2P$(cyclohexyle)$_3$.

**8.** Composition selon la revendication 1, contenant en tant que composant (c) un oxyde, un carbonate, un sulfate ou un silicate métallique ou $SiO_2$.

**9.** Composition selon la revendication 1, contenant en tant que composant (c), $SiO_2$.

**10.** Composition selon la revendication 1, contenant un oxyde d'aluminium basique, un gel de silice ou une zéolithe en tant qu'adsorbant basique.

**11.** Composition selon la revendication 1, contenant une zéolithe en tant qu'adsorbant basique.

**12.** Composition selon la revendication 1, contenant, par rapport à la totalité de la composition, de 15 à 96% en masse du composant (a), de 0,001 à 10,0% en masse du composant (b) et de 4 à 85% en masse du composant (c).

**13.** Composition selon la revendication 1, où la quantité de l'adsorbant basique s'élève à 1,0-10,0% en masse, par rapport à la totalité de la composition.

**14.** Procédé de préparation d'un polymère par métathèse, caractérisé en ce qu'on chauffe une composition selon la revendication 1 à une température de >40°C.

**15.** Utilisation de la composition selon la revendication 1, en tant que matériau enrobage de composants électriques ou électroniques.